# EUROPÄISCHE PATENTSCHRIFT

(11) **EP 3 390 186 B1**
(45) Veröffentlichungstag und Bekanntmachung des Hinweises auf die Patenterteilung: **30.10.2019**
(21) Anmeldenummer: 16815816.0
(22) Anmeldetag: 15.12.2016
(51) Int. Cl.: B60T 17/00, B01D 53/04

(54) **LUFTTROCKNERPATRONE**
AIR DRYER CARTRIDGE
CARTOUCHE DE SÉCHEUR D'AIR

(30) Priorität: 18.12.2015 DE 102015122169
(43) Veröffentlichungstag der Anmeldung: 24.10.2018
(73) Patentinhaber: KNORR-BREMSE Systeme für Nutzfahrzeuge GmbH, 80809 München (DE)
(72) Erfinder: REIFINGER, Günther, 82110 Germering (DE); OCHSENKÜHN, Andreas, 80339 München (DE); SCHÄBEL, Stefan, 84036 Landshut (DE); LEINUNG, Andreas, 81245 München (DE)
(86) Internationale Anmeldenummer: PCT/EP2016/081219
(87) Internationale Veröffentlichungsnummer: WO 2017/102962

(56) Entgegenhaltungen:
- EP-A1- 1 669 125
- EP-A2- 2 140 924
- WO-A2-2013/186243
- DE-A1-102009 030 897
- DE-A1-102010 010 882
- DE-A1-102011 116 520
- DE-A1-102012 004 610
- DE-B4- 10 392 976

## Beschreibung

Die vorliegende Erfindung betrifft eine Lufttrocknerpatrone, insbesondere für eine Druckluftaufbereitungsanlage von Nutzfahrzeugen.

Derartige Lufttrocknerpatronen kommen zum Beispiel in Nutzfahrzeugen wie Lastkraftwagen und Traktoren zum Einsatz. Diese verfügen häufig über einen oder mehrere Druckluftverbraucher wie zum Beispiel Bremssysteme oder Luftfederungen, die mit Druckluft versorgt werden müssen. Die Druckluft wird typischerweise von einem Kompressor, zum Beispiel einem von einem Antriebsmotor des Fahrzeugs angetriebenen Hubkolbenkompressor, zur Verfügung gestellt. Um einen störungsfreien Betrieb der Druckluftverbraucher zu gewährleisten, muss die vom Kompressor bereitgestellte Druckluft üblicherweise weiter aufbereitet werden. In den dafür vorgesehenen Druckluftaufbereitungsanlagen wird die Druckluft von Schmutzpartikeln, die bereits in der angesaugten Luft enthalten waren, sowie Öl- und Rußpartikeln, die während des Verdichtungsprozesses vom Kompressor in die Druckluft eingetragen werden, gereinigt und wird in der Druckluft vorhandene Feuchtigkeit abgeschieden. Zu diesem Zweck verfügen die Druckluftaufbereitungsanlagen von Nutzfahrzeugen in der Regel über Lufttrocknerpatronen, die die Druckluft entfeuchten und vorzugsweise auch Öl- und Schmutzpartikel aufnehmen können.

Herkömmliche Lufttrocknerpatronen weisen ein Patronengehäuse mit einem geschlossenen Gehäusedeckel, ein in dem Patronengehäuse aufgenommenes Trockenmittel und einen Befestigungsflansch zum Verschließen einer dem Gehäusedeckel abgewandten offenen Stirnseite des Patronengehäuses und Befestigen der Lufttrocknerpatrone an einer Druckluftaufbereitungsvorrichtung auf. Üblicherweise ist an der dem Gehäusedeckel abgewandten Stirnseite der Lufttrocknerpatrone ein Bodenblech vorgesehen, das einerseits mit dem Befestigungsflansch verbunden ist und andererseits mit dem Patronengehäuse mittels einer Bördelung verbunden ist. Dieses Bodenblech ist derart geformt, dass es eine ringförmige Aussparung aufweist, in welche ein Vierkant-Dichtring eingesetzt ist bzw. einsetzbar ist, der eine Abdichtung zwischen der Lufttrocknerpatrone und der Druckluftaufbereitungsvorrichtung in radialer Richtung bewirken soll. Eine solche Lufttrocknerpatrone ist beispielsweise in der DE 10 2013 103 066 A1 offenbart.

Weitere Lufttrocknerpatronen sind beispielsweise bekannt aus der EP 1 669 125 A1, der DE 103 92 976 B4, der EP 2 140 924 A2, der DE 10 2009 030 897 A1, und der DE 10 2011 116 520 A1.

Der Erfindung liegt die Aufgabe zugrunde, eine verbesserte Lufttrocknerpatrone zu schaffen, mit welcher eine erhöhte Trockenleistung erzielt werden kann und/oder welche ein einfacheres Handling insbesondere beim Montieren und Demontieren an bzw. von einer Druckluftaufbereitungsvorrichtung erlaubt.

Diese Aufgabe wird gelöst durch eine Lufttrocknerpatrone mit den Merkmalen des Anspruchs 1. Vorteilhafte Ausgestaltungen der Erfindung sind Gegenstand der abhängigen Ansprüche.

Die erfindungsgemäße Lufttrocknerpatrone weist ein Patronengehäuse mit einem geschlossenen Gehäusedeckel, ein in dem Patronengehäuse aufgenommenes Trockenmittel und eine innerhalb des Patronengehäuses angeordnete Filtereinrichtung, die in radialer Richtung quer zu einer Längsachse der Lufttrocknerpatrone von Druckluft durchströmbar ist, auf. Bei der erfindungsgemäßen Lufttrocknerpatrone ist ein Raumbereich innerhalb des Patronengehäuses, der in radialer Richtung neben und außerhalb der Filtereinrichtung liegt, zumindest teilweise mit Trockenmittel gefüllt.

Gemäß der Erfindung wird vorgeschlagen, auch einen Raumbereich außerhalb einer in radialer Richtung von Druckluft durchströmbaren Filtereinrichtung zumindest teilweise für die Aufnahme von Trockenmittel zu nutzen. Aufgrund der effizienteren Nutzung des Bauraums der Lufttrocknerpatrone für die Aufnahme des Trockenmittels kann mehr Trockenmittel im gleichen Bauraum untergebracht werden, sodass eine höhere Trockenleistung mit der Lufttrocknerpatrone erzielbar ist, oder wird weniger Bauraum für das Trockenmittel benötigt, sodass das Patronengehäuse und damit die gesamte Lufttrocknerpatrone mit einem kleineren Außendurchmesser konstruiert werden können. Eine Lufttrocknerpatrone mit kleinerem Außendurchmesser erlaubt ein einfacheres Handling, insbesondere auch mit nur einer Hand, beim Montieren und Demontieren der Lufttrocknerpatrone an bzw. von einer Druckluftaufbereitungsvorrichtung. Eine derart verkleinerte Lufttrocknerpatrone benötigt zudem weniger Bauraum in der radialen Richtung. Sie kann ferner mit einem reduzierten Material- und Kostenaufwand hergestellt werden. Die Filtereinrichtung ist vorzugsweise als Koaleszenzfilter oder Ölfilter ausgestaltet.

In einer vorteilhaften Ausgestaltung der Erfindung ist zudem ein Bypass vorgesehen, durch den Druckluft an der Filtereinrichtung vorbei strömen kann und in dem ein Rückschlagventil angeordnet ist. Bei dieser Ausgestaltung ist vorzugsweise ein Raumbereich innerhalb des Patronengehäuses, der in radialer Richtung außerhalb des Rückschlagventils liegt, zumindest teilweise mit Trockenmittel gefüllt. Auf diese Weise kann der Bauraum der Lufttrocknerpatrone noch effizienter für die Aufnahme von Trockenmittel genutzt werden und können die oben beschriebenen Vorteile noch verstärkt werden.

In einer vorteilhaften Ausgestaltung der Erfindung beträgt eine radiale Breite des Raumbereichs radial außerhalb der Filtereinrichtung in einer Richtung quer zur Längsachse der Lufttrocknerpatrone wenigstens etwa 10%, bevorzugter wenigstens etwa 12% eines maximalen Außendurchmessers des Patronengehäuses oder wenigstens etwa 10 mm, bevorzugter wenigstens etwa 15 mm.

In einer vorteilhaften Ausgestaltung der Erfindung beträgt der maximale Außendurchmesser des Patronengehäuses höchstens etwa 130 mm, bevorzugt etwa 126 mm.

In einer weiteren vorteilhaften Ausgestaltung der Erfindung beträgt der maximale Außendurchmesser des Patronengehäuses höchstens etwa 80%, bevorzugt höchstens etwa 75% einer Höhe des Patronengehäuses parallel zur Längsachse der Lufttrocknerpatrone.

In einer weiteren vorteilhaften Ausgestaltung der Erfindung ist der Koaleszenzfilter im Wesentlichen koaxial zur Längsachse der Lufttrocknerpatrone angeordnet.

In einer noch weiteren vorteilhaften Ausgestaltung der Erfindung ist in dem Patronengehäuse ein inneres Gehäuse angeordnet, um das Trockenmittel in einem zwischen dem Patronengehäuse und dem inneren Gehäuse gebildeten Aufnahmeraum aufzunehmen, und ist ein Vorspannelement vorgesehen, um zumindest einen Teil des inneren Gehäuses in Richtung zum Gehäusedeckel zu drücken. Bei dieser Ausgestaltung ist vorzugsweise ein Teil des Trockenmittels in einem Raumbereich radial innerhalb des Vorspannelements aufgenommen. Durch diese Maßnahme kann der Raum innerhalb des Patronengehäuses effizienter zur Aufnahme des Trockenmittels genutzt werden. Im Ergebnis wird weniger Bauraum für das Trockenmittel benötigt und die Lufttrocknerpatrone kann mit einem entsprechend kleineren Außendurchmesser konstruiert werden oder kann mehr Trockenmittel in der Lufttrocknerpatrone aufgenommen werden.

Vorzugsweise weist das innere Gehäuse einen ersten Teil und einen zweiten Teil auf, wobei der erste Teil radial außerhalb des zweiten Teils angeordnet ist und der zweite Teil relativ zum ersten Teil in axialer Richtung parallel zur Längsachse der Lufttrocknerpatrone bewegbar ist.

Bei dieser Ausgestaltung ist der zweite Teil des inneren Gehäuses bevorzugt becherförmig ausgebildet und zumindest teilweise von dem Vorspannelement umgeben.

Ein Durchmesser des Raumbereichs radial innerhalb des Vorspannelements, in dem Trockenmittel aufgenommen ist, beträgt in einer Richtung quer zur Längsachse der Lufttrocknerpatrone wenigstens etwa 25%, bevorzugt wenigstens etwa 30% des maximalen Außendurchmessers des Patronengehäuses und/oder maximal etwa 45 mm, bevorzugt maximal etwa 40 mm.

Die vorliegende Erfindung ist insbesondere zum Einsatz in Druckluftaufbereitungsanlagen eines Nutzfahrzeugs vorteilhaft geeignet.

Obige sowie weitere Vorteile, Merkmale und Anwendungsmöglichkeiten der Erfindung werden aus der nachfolgenden Beschreibung von verschiedenen Ausführungsbeispielen anhand der beiliegenden Zeichnungen besser verständlich. Darin zeigen, größtenteils schematisch:
- Fig. 1: eine Teilschnittansicht eines Druckluftaufbereitungssystems gemäß einem Ausführungsbeispiel der Erfindung; und
- Fig. 2: eine vereinfachte Darstellung einer Lufttrocknerpatrone der Erfindung zur Veranschaulichung verschiedener Maßangaben.

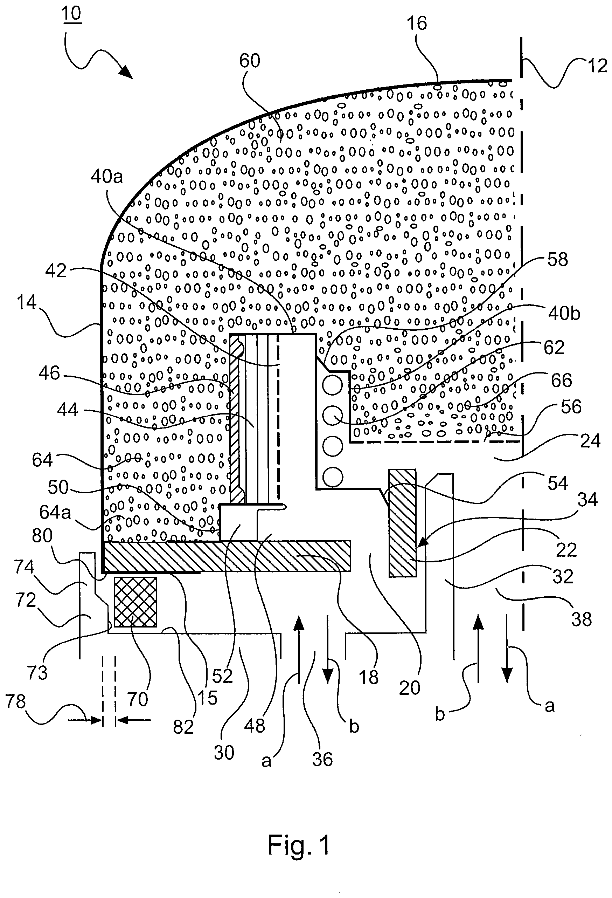

**Fig. 1** zeigt den Aufbau eines Druckluftaufbereitungssystems mit einer erfindungsgemäßen Lufttrocknerpatrone gemäß einem Ausführungsbeispiel, die an einer Druckluftaufbereitungsvorrichtung montiert ist.

Die Lufttrocknerpatrone 10 ist im Wesentlichen rotationssymmetrisch zu einer Längsachse 12 ausgebildet und weist ein im Wesentlichen zylindrisches bzw. becherförmiges Patronengehäuse 14 mit einem geschlossenen Gehäusedeckel 16 auf, das in Form eines tiefgezogenen Bleches ausgestaltet ist. Die dem Gehäusedeckel 16 abgewandte offene Stirnseite des Patronengehäuses 14 ist mit einem Befestigungsflansch 18 (bevorzugt aus Metall) verschlossen. Der Befestigungsflansch 18 ist fest und fluiddicht mit dem Patronengehäuse 14 verbunden.

Der Befestigungsflansch 18 weist eine zum Beispiel kreisringförmige Einlassöffnung 20 und eine zum Beispiel kreisförmige, zentrale Auslassöffnung 24 auf. Die Auslassöffnung 24 ist in radialer Richtung quer zur Längsachse 12 innerhalb der Einlassöffnung 20 angeordnet. Die Begriffe "Einlass" und "Auslass" beziehen sich in diesem Zusammenhang auf die Fluidströmungsrichtung durch die Lufttrocknerpatrone 10 im normalen Betrieb zum Trocknen und Reinigen des Fluids. Im Regenerationsbetrieb werden die Lufttrocknerpatrone 10 und damit die Einlass- und Auslassöffnungen 20, 24 in umgekehrter Richtung durchströmt.

Die zentrale Auslassöffnung 24 ist von einem Befestigungsstutzen 22 des Befestigungsflansches 18 begrenzt. Dieser Befestigungsstutzen 22 ist mit einem Innengewinde versehen.

Die Lufttrocknerpatrone 10 ist an einer Druckluftaufbereitungsvorrichtung 30 montierbar, die Teil einer Druckluftaufbereitungsanlage ist. Die Druckluftaufbereitungsvorrichtung 30 weist einen Anschlussstutzen 32 auf, der mit einem Außengewinde versehen ist. Die Lufttrocknerpatrone 10 kann so mit dem Befestigungsstutzen 22 ihres Befestigungsflansches 18 auf den Anschlussstutzen 32 der Druckluftaufbereitungsvorrichtung 30 geschraubt werden. Die Schraubverbindung 34 zwischen dem Befestigungsstutzen 22 und dem Anschlussstutzen 32 bildet eine lösbare, aber fluiddichte Verbindung zwischen der Lufttrocknerpatrone 10 und der Druckluftaufbereitungsvorrichtung 30. Im montierten Zustand sind die Längsachse 12 der Lufttrocknerpatrone 10 und die Längsachse des Anschlussstutzens 32 der Druckluftaufbereitungsvorrichtung 30 koaxial zueinander.

Die Druckluftaufbereitungsvorrichtung 30 weist eine zum Beispiel kreisringförmige erste Öffnung 36 auf, die im montierten Zustand der Lufttrocknerpatrone 10 in Fluidverbindung mit der Einlassöffnung 20 des Befestigungsflansches 18 steht. Die Druckluftaufbereitungsvorrichtung 30 weist ferner eine zum Beispiel kreisförmige zweite Öffnung 38 auf, die im montierten Zustand der Lufttrocknerpatrone 10 in Fluidverbindung mit der Auslassöffnung 24 des Befestigungsflansches 18 steht. Die Pfeile a symbolisieren die Fluidströmungsrichtung im Normalbetrieb der Lufttrocknerpatrone 10, und die Pfeile b symbolisieren die Fluidströmungsrichtung im Regenerationsbetrieb der Lufttrocknerpatrone 10.

Wie in Fig. 1 dargestellt, weist die Lufttrocknerpatrone 10 zudem ein inneres Gehäuse 40 auf, das aus einem ersten Teil 40a und einem zweiten Teil 40b besteht und vorzugsweise aus einem Kunststoffmaterial gebildet ist. Der erste Teil 40a des inneren Gehäuses 40 ist in radialer Richtung quer zur Längsachse 12 außerhalb des zweiten Teils 40b des inneren Gehäuses 40 angeordnet. Das Patronengehäuse 14, der Befestigungsflansch 18 und das innere Gehäuse 40 bilden zwischen sich einen Aufnahmeraum für ein Trockenmittel 60 (z. B. Silikagel).

Der erste Teil 40a des inneren Gehäuses 40 ist an einem Wandabschnitt mit mehreren Öffnungen 42 versehen, die mit der Einlassöffnung 20 des Befestigungsflansches 18 in Fluidverbindung stehen. Im Normalbetrieb der Lufttrocknerpatrone 10 kann so die Druckluft aus der Druckluftaufbereitungsvorrichtung 30 durch die Einlassöffnung 20 im Befestigungsflansch 18 und die Öffnungen 42 des inneren Gehäuses 40 ins Innere des Patronengehäuses 14 strömen.

Die mit den Öffnungen 42 versehene Wandung des ersten Teils 40a des inneren Gehäuses 40 ist von einer Filtereinrichtung 44 in Form eines Koaleszenzfilters oder Ölfilters umgeben. Die Filtereinrichtung 44 ist zum Beispiel um die im Wesentlichen parallel zur Längsachse 12 der Lufttrocknerpatrone 10 verlaufende Wandung des ersten Teils 40a des inneren Gehäuses 40 gewickelt. Auf diese Weise kann die Druckluft, bevor sie das Trockenmittel 60 im Patronengehäuse 14 der Lufttrocknerpatrone 10 durchströmt, gereinigt werden.

Die Filtereinrichtung 44 ist wiederum von einem sogenannten Wicking-Material 46 umgeben, das durch ein poröses Material, ein Vliesmaterial, etc. gebildet sein kann und für Luft durchlässig ist. Das Wicking-Material 46 verhindert eine Ölkontamination des Trockenmittels 60.

Die Druckluft durchströmt die Filtereinrichtung 44 in radialer Richtung quer zur Längsachse 12 der Lufttrocknerpatrone 10. Ein Raumbereich 64 radial außerhalb der Filtereinrichtung 44 ist ebenfalls mit Trockenmittel 60 gefüllt. Auf diese Weise kann der Raum innerhalb des Patronengehäuses 14 optimal zur Aufnahme des Trockenmittels 60 genutzt werden, sodass im Ergebnis mehr Trockenmittel 60 im gleichen Bauraum untergebracht werden kann und so eine höhere Trockenleistung für die Lufttrocknerpatrone 10 erzielbar ist, oder weniger Bauraum für das Trockenmittel 60 benötigt wird und so die Lufttrocknerpatrone 10 mit einem kleineren Durchmesser von zum Beispiel nur etwa 126 mm (im Vergleich zu einem Durchmesser von etwa 140 mm herkömmlicher Lufttrocknerpatronen) konstruiert werden kann. Ein kleinerer Durchmesser hat wiederum Vorteile hinsichtlich des Handlings der Lufttrocknerpatrone 10 und des notwendigen Bauraums in einer Druckluftaufbereitungsanlage.

Unterhalb der Filtereinrichtung 44 ist ein Bypass 48 vorgesehen. In einer Wandung des ersten Teils 40a des inneren Gehäuses 40, die im Wesentlichen parallel zur Längsachse 12 der Lufttrocknerpatrone 10 verläuft, sind Öffnungen 50 vorgesehen, die den Innenraum der Lufttrocknerpatrone mit dem Bypass 48 verbinden. Im Bypass 48 ist zudem ein Rückschlagventil 52 angeordnet. Das Rückschlagventil 52 verhindert im Normalbetrieb der Lufttrocknerpatrone 10, dass Druckluft von der Einlassöffnung 20 an der Filtereinrichtung 44 vorbei durch den Bypass 48 ungereinigt in das Trockenmittel 60 strömt, erlaubt aber im Regenerationsbetrieb der Lufttrocknerpatrone 10 einen Luftstrom b an der Filtereinrichtung 44 vorbei. Das Rückschlagventil 52 ist bevorzugt aus einem Kunststoffmaterial (z. B. einem Elastomer) gebildet. Es ist bevorzugt einstückig mit dem ersten Teil 40a des inneren Gehäuses 40 ausgestaltet.

Ein Raumbereich 64a radial außerhalb des Rückschlagventils 52 ist ebenfalls mit Trockenmittel 60 gefüllt. Auf diese Weise kann der Raum innerhalb des Patronengehäuses 14 noch effektiver zur Aufnahme des Trockenmittels 60 genutzt werden.

Wie in Fig. 1 dargestellt, ist der erste Teil 40a des inneren Gehäuses 40 im Bereich des Bypasses 48 fluiddicht mit dem Befestigungsflansch 18 verbunden, zum Beispiel verklebt. Im Bereich des Befestigungsstutzens 22 ist an dem ersten Teil 40a des inneren Gehäuses 40 eine Dichtlippe 54 vorgesehen, die bevorzugt einteilig damit ausgebildet ist und bevorzugt gegen den Befestigungsstutzen 22 elastisch vorgespannt ist.

Der zweite Teil 40b des inneren Gehäuses 40 weist im zentralen Bereich Öffnungen 56 auf, die den Innenraum des Patronengehäuses 14 mit der Auslassöffnung 24 verbinden. Am radial äußeren Umfangsrand des zweiten Teils 40b ist eine Dichtlippe 58 vorgesehen, die bevorzugt einteilig damit ausgebildet ist und bevorzugt gegen den ersten Teil 40a des inneren Gehäuses 40 elastisch vorgespannt ist.

Der zweite Teil 40b des inneren Gehäuses 40 ist in axialer Richtung, d. h. parallel oder koaxial zur Längsachse 12 der Lufttrocknerpatrone 10 in dem Patronengehäuse 10 bewegbar. Mittels eines Vorspannelements 62 in Form einer Druckfeder, die sich gegen den ersten Teil 40a des inneren Gehäuses 40 abstützt, wird der zweite Teil 40b des inneren Gehäuses 40 in Richtung zum Gehäusedeckel 16 gedrückt, um das Trockenmittel 60 zu komprimieren. Durch die Dichtlippe 58 am zweiten Teil 40b bleibt dabei das innere Gehäuse 40 zwischen seinen beiden Teilen 40a, 40b fluiddicht.

Wie in Fig. 1 erkennbar, ist der zweite Teil 40b des inneren Gehäuses 40 derart ausgestaltet, dass ein Teil des Trockenmittels 60 in einem Raumbereich 66 in radialer Richtung innerhalb des Vorspannelements 62 angeordnet ist. Durch diese optimale Raumausnutzung im Innern des Patronengehäuses 14 kann die Lufttrocknerpatrone 10 bei gleicher Trockenleistung kleiner, d. h. mit einem kleineren Durchmesser und/oder einer kleineren Höhe ausgestaltet werden.

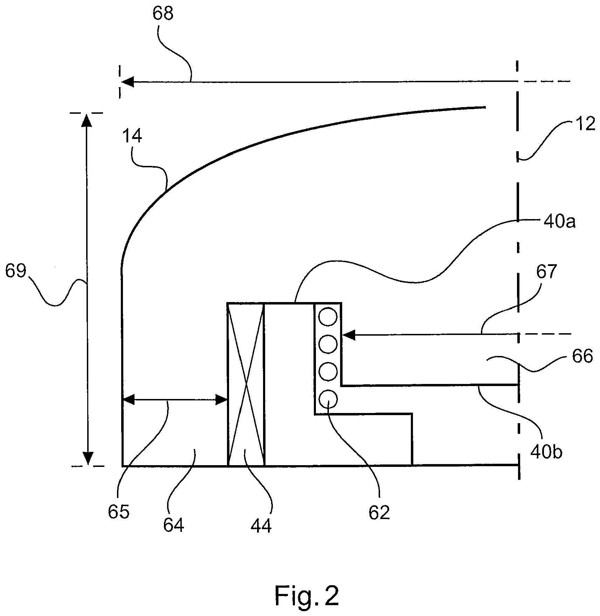

Fig. 2 zeigt an einer stark vereinfacht dargestellten Lufttrocknerpatrone verschiedene Maßangaben, die bei der erfindungsgemäßen Lufttrocknerpatrone 10 relevant sind.

Eine Höhe der Lufttrocknerpatrone 10 (in axialer Richtung parallel zur Längsachse 12 der Lufttrocknerpatrone) ist mit der Bezugsziffer 69 gekennzeichnet, ein maximaler Außendurchmesser der Lufttrocknerpatrone 10 bzw. ihres Patronengehäuses 14 (in radialer Richtung senkrecht zur Längsachse 12 der Lufttrocknerpatrone) ist mit der Bezugsziffer 68 gekennzeichnet. Ein radialer Durchmesser des Raumbereichs 66, in dem Trockenmittel 60 radial innerhalb des Vorspannelements 62 vorhanden ist, ist mit der Bezugsziffer 67 gekennzeichnet, und eine radiale Breite des Raumbereichs 64, in dem Trockenmittel 60 radial außerhalb des Koaleszenzfilters 44 vorhanden ist, ist mit der Bezugsziffer 64 gekennzeichnet.

Allgemein beträgt der maximale Außendurchmesser 68 des Patronengehäuses 14 höchstens etwa 130 mm, beispielsweise etwa 126 mm; beträgt der maximale Außendurchmesser 68 des Patronengehäuses 14 höchstens etwa 80%, beispielsweise etwa 70 bis 75% der Höhe 69 des Patronengehäuses 14; beträgt die radiale Breite 65 des Raumbereichs 64 wenigstens etwa 10%, bevorzugter wenigstens etwa 12% des Außendurchmessers 68 des Patronengehäuses 14 oder wenigstens etwa 10 mm, bevorzugt wenigstens etwa 15 mm; und beträgt der radiale Durchmesser 67 des Raumbereichs 66 wenigstens etwa 25%, bevorzugter wenigstens etwa 30% des Außendurchmessers 68 des Patronengehäuses 14 und maximal etwa 45 mm, bevorzugter maximal etwa 40 mm.

In einem konkreten Ausführungsbeispiel der Lufttrocknerpatrone 10 betragen die Höhe 69 der Lufttrocknerpatrone 10 etwa 165 mm, der Außendurchmesser 68 des Patronengehäuses 14 etwa 126 mm, die radiale Breite 65 des Raumbereichs 64 etwa 18,5 mm, und der radiale Durchmesser 67 des Raumbereichs 66 etwa 40 mm.

Um eine fluiddichte Abdichtung zwischen der Druckluftaufbereitungsvorrichtung 30 und der Lufttrocknerpatrone 10 in radialer Richtung zu erzielen, ist zwischen diesen beiden Elementen ein Dichtring 70, im Ausführungsbeispiel von Fig. 1 vorzugsweise ein Vierkant-Dichtring angeordnet. Der Dichtring 70 hat zum Beispiel eine Breite (in Richtung senkrecht zur Längsachse 12) im entspannten Ausgangszustand im Bereich von etwa 5 bis 8 mm, bevorzugt von etwa 6 bis 6,5 mm, eine Höhe (in Richtung parallel zur Längsachse 12) im entspannten Ausgangszustand im Bereich von etwa 6 bis 10 mm, bevorzugt von etwa 7 bis 8 mm, und einen Außendurchmesser im entspannten Ausgangszustand im Bereich von etwa 100 bis 120 mm.

Der Dichtring 70 liegt einerseits an einer ersten Dichtfläche 80 der Lufttrocknerpatrone 10 und andererseits an einer zweiten Dichtfläche 82 der Druckluftaufbereitungsvorrichtung 30 an. Beim Verschrauben der Lufftrocknerpatrone 10 mit der Druckluftaufbereitungsvorrichtung 30 wird der Dichtring 70 komprimiert und erzeugt eine fluiddichte Abdichtung gegenüber den beiden Dichtflächen 80, 82.

Die erste Dichtfläche 80 ist an einer dem Gehäusedeckel 16 des Patronengehäuses 14 abgewandten Stirnseite der Lufttrocknerpatrone 10 vorgesehen. Sie verläuft in einer Ebene im Wesentlichen senkrecht zur Längsachse 12 der Lufttrocknerpatrone 10 im Wesentlichen plan. Außerdem erstreckt sich die erste Dichtfläche 80 in radialer Richtung senkrecht zur Längsachse 12 der Lufttrocknerpatrone 10 innerhalb eines äußeren Drittels der Lufttrocknerpatrone 10 über wenigstens 10 mm.

In dem Ausführungsbeispiel von Fig. 1 wird die erste Dichtfläche 80 durch das Blech des Patronengehäuses 14 gebildet, welches das an der offenen Stirnseite des Patronengehäuses 14 eine vorbestimmte Länge im Wesentlichen plan um den Befestigungsflansch 18 herum gelegt ist. In dem Ausführungsbeispiel von Fig. 1 ist das Patronengehäuse 14 um etwa 15 mm um den Befestigungsflansch 18 umgelegt, sodass sich die erste Dichtfläche 80 in radialer Richtung ebenfalls über etwa 15 mm erstreckt, ohne dass dieses Ausführungsbeispiel auf diese Maße beschränkt sein soll. Der umgelegte Abschnitt 15 des Patronengehäuses 14 kann zudem mit dem Befestigungsflansch 18 verschweißt, verlötet oder verklebt sein.

Die zweite Dichtfläche 82 ist an einer der Lufttrocknerpatrone 10 zugewandten Außenseite der Druckluftaufbereitungsvorrichtung 30 ausgebildet. Sie verläuft in einer Ebene im Wesentlichen senkrecht zur Längsachse des Anschlussstutzens 32 und damit auch im Wesentlichen senkrecht zur Längsachse 12 der Lufttrocknerpatrone im Wesentlichen plan. Die erste und die zweite Dichtfläche 80, 82 verlaufen somit im Wesentlichen parallel zueinander.

Um die Position des Dichtrings 70 bei einer Druckluftbelastung in radialer Richtung nach außen abzustützen, ist an der Druckluftaufbereitungsvorrichtung 30 ein umlaufender Stützvorsprung 72 vorgesehen, bevorzugt einteilig damit ausgebildet. Dieser Stützvorsprung 72 grenzt in radialer Richtung senkrecht zur Längsachse 12 der Lufttrocknerpatrone 10 außen an die zweite Dichtfläche 82 an. Der Stützvorsprung 72 ragt im Wesentlichen parallel zur Längsachse 12 der Lufttrocknerpatrone 10 in Richtung zur Lufttrocknerpatrone 10 und weist auf seiner dem Anschlussstutzen 32 zugewandten Innenseite eine Anlagefläche 73 für den Dichtring 70 auf.

Die Anlagefläche 73 des Stützvorsprungs 72 erstreckt sich dabei in einer Richtung parallel zur Längsachse 12 der Lufttrocknerpatrone 10 über eine Höhe, die kleiner bemessen ist als ein Höhenmaß des Dichtrings 70 in einer Richtung parallel zur Längsachse 12 der Lufttrocknerpatrone 10. In dem Ausführungsbeispiel von Fig. 1 beträgt das Höhenmaß der Anlagefläche 73 des Stützvorsprungs 72 etwa 3,5 bis 4,0 mm. So kann sichergestellt werden, dass das Patronengehäuse 14 beim Montieren der Lufttrocknerpatrone 10 an der Druckluftaufbereitungsvorrichtung 30 nicht mit dem Stützvorsprung 72 in Kontakt kommt und der Dichtring 70 dementsprechend ausreichend komprimiert werden kann, um die gewünschte Dichtwirkung zu gewährleisten.

Ferner weist der Stützvorsprung 72 an seiner der Lufttrocknerpatrone 10 zugewandten Stirnseite einen Endabschnitt 74 auf. Wie in Fig. 1 veranschaulicht, ist dieser Endabschnitt 74 in radialer Richtung senkrecht zur Längsachse 12 der Lufftrocknerpatrone 10 außerhalb der Anlagefläche 73 des Stützvorsprungs 72 und außerhalb des Patronengehäuses 14 der Lufttrocknerpatrone 10 angeordnet. Dabei erstreckt sich der Stützvorsprung 72 einschließlich Endabschnitt 74 in Richtung parallel zur Längsachse 12 der Lufttrocknerpatrone 10 insgesamt über eine Höhe, die größer bemessen ist als das Höhenmaß des Dichtrings 70. In dem Ausführungsbeispiel von Fig. 1 beträgt das Gesamthöhenmaß des Stützvorsprungs 72 etwa 10 bis 15 mm. Der Endabschnitt 74 des Stützvorsprungs kann so als Positionierhilfe bei der Montage der Lufttrocknerpatrone 10 an der Druckluftaufbereitungsvorrichtung 30 dienen. Außerdem kann der Endabschnitt 74 des Stützvorsprungs 72 als Spritzwasserschutz dienen.

Diese Konstruktion der ersten und zweiten Dichtflächen 80, 82 für den Dichtring 70 führt dazu, dass die Position des Dichtrings 70 in radialer Richtung nicht fest vorgegeben ist, sondern innerhalb der Grenzen der Dichtflächen 80, 82 frei gewählt werden kann. Damit entsteht eine größere Flexibilität bei der Kombination von Lufttrocknerpatronen 10 mit unterschiedlichen Druckluftaufbereitungsvorrichtungen 30 bzw. unterschiedlicher Lufttrocknerpatronen 10 mit einer Druckluftaufbereitungsvorrichtung 30.

Da außerdem im Vergleich zu herkömmlichen Konstruktionen auf eine umlaufende Nut in einem Bodenblech der Lufttrocknerpatrone 10 verzichtet wird, in welche der Dichtring eingeklemmt werden muss, kann der Dichtring 70 sehr einfach an die erste Dichtfläche 80 angelegt werden, sodass die Montage und die Demontage des Dichtrings 70 vereinfacht sind. Zudem kann bei dieser Konstruktion auf ein Bodenblech und eine entsprechende Bördelverbindung zwischen Bodenblech und Patronengehäuse 14 verzichtet werden, sodass die Material- und Montagekosten der Lufttrocknerpatrone 10 reduziert sind.

Um die Montage des Dichtrings 70 zu vereinfachen, kann dieser vor der Montage der Lufttrocknerpatrone 10 an der Druckluftaufbereitungsvorrichtung 30 mit einer Klebeschicht bzw. einem Klebestreifen an der ersten Dichtfläche 80 der Lufttrocknerpatrone 10 oder an der zweiten Dichtfläche 82 der Druckluftaufbereitungsvorrichtung 30 vorfixiert werden. Die Lufttrocknerpatronen 10 werden üblicherweise mit einer Schutzabdeckung geliefert, welche die dem Gehäusedeckel 16 abgewandte Stirnseite der Lufttrocknerpatrone 10 abdeckt. In dieser Schutzabdeckung kann der Dichtring 70 als separate Komponente eingelegt sein. Nach dem Abnehmen der Schutzabdeckung von der Lufttrocknerpatrone 10 kann zum Beispiel eine Schutzfolie von dem Dichtring 70 entfernt werden, um die Klebeschicht auf dem Dichtring 70 freizulegen. Der Dichtring 70 kann dann an der ersten oder der zweiten Dichtfläche 80, 82 fixiert werden, bevor die Lufttrocknerpatrone 10 auf die Druckluftaufbereitungsvorrichtung 30 verschraubt wird. Alternativ kann der Dichtring 70 bereits im angelieferten Zustand an der Lufttrocknerpatrone 10 fixiert sein. Anstelle der Klebung ist auch eine Fettung denkbar, die eine ausreichende Haftung gewährleistet.

Ferner besteht die Möglichkeit, eine Seite des Dichtrings 70 (z. B. die der ersten Dichtfläche 80 zugewandte Seite) mit einer Klebeschicht zu versehen und die gegenüber liegende Seite des Dichtrings 70 (z. B. die der zweiten Dichtfläche 82 zugewandte Seite) mit einer Gleitschicht zu versehen. Beim Verschrauben der Lufttrocknerpatrone 10 mit der Druckluftaufbereitungsvorrichtung 30 kann der Dichtring 70 dann über die zweite Dichtfläche 82 gleiten, bis die notwendige Pressung erreicht ist.

Wie in Fig. 1 gut erkennbar, ist der Dichtring 70 in radialer Richtung relativ weit außen positioniert bzw. steht der Außendurchmesser 68 des Patronengehäuses 14 relativ wenig über den Außendurchmesser des Dichtrings 70 über.

Ein radiales Überstandsmaß 78 des Außendurchmessers 68 des Patronengehäuses 14 gegenüber dem Außendurchmesser des Dichtrings 70 in radialer Richtung quer zur Längsachse 12 der Lufttrocknerpatrone 10 beträgt gemäß der Erfindung nur höchstens etwa 6 mm, bevorzugter höchstens etwa 4 mm, oder höchstens etwa 5%, bevorzugter höchstens etwa 3% des maximalen Außendurchmessers 68 des Patronengehäuses 14. In einer konkreten Ausführungsform beträgt das radiale Überstandsmaß 78 etwa 1,5 bis 2,0 mm bzw. etwa 1 bis 2% des Außendurchmessers 68 des Patronengehäuses.

Wie in Fig. 1 veranschaulicht, besteht grundsätzlich die Möglichkeit, dass sich in dem Zwischenraum zwischen dem Stützvorsprung 72, dem Dichtring 70 und dem Patronengehäuse 14 Flüssigkeit (z. B. Kondenswasser, Spritzwasser, etc.) ansammelt. In einer vorteilhaften Weiterbildung des Ausführungsbeispiels von Fig. 1 kann daher der Stützvorsprung 72 mit einer oder bevorzugt mehreren Öffnungen / Bohrungen oder Aussparungen zum Entwässern dieses Zwischenraums ausgebildet sein.

Die vorliegende Erfindung ist nicht auf die oben beschriebenen Ausführungsbeispiele des Druckluftaufbereitungssystems beschränkt. Der Fachmann wird vielmehr zahlreiche Varianten und Modifikationen erkennen, die in den Schutzbereich der Ansprüche fallen.

Während das innere Gehäuse 40 in den beschriebenen Ausführungsbeispielen jeweils aus einem ersten Teil 40a und einem zweiten Teil 40b aufgebaut ist, kann das innere Gehäuse 40 in anderen Ausführungsbeispielen auch einteilig ausgebildet sein oder aus mehr als zwei Gehäuseteilen zusammengesetzt sein.

Während das Rückschlagventil 52 und die Dichtlippen 54, 58 in den beschriebenen Ausführungsbeispielen jeweils einteilig mit dem inneren Gehäuse 40 ausgebildet sind, können diese Komponenten 52, 54, 58 in anderen Ausführungsbeispielen auch als separate Komponenten ausgebildet sein, die mit dem inneren Gehäuse 40 verbunden sind.

### BEZUGSZEICHENLISTE

- 10: Lufttrocknerpatrone
- 12: Längsachse
- 14: Patronengehäuse
- 16: Gehäusedeckel
- 18: Befestigungsflansch
- 20: Einlassöffnung
- 22: Befestigungsstutzen
- 24: Auslassöffnung
- 28: Verbindung
- 30: Druckluftaufbereitungsvorrichtung
- 32: Anschlussstutzen
- 34: Schraubverbindung
- 36: erste Öffnung
- 38: zweite Öffnung
- 40: inneres Gehäuse
- 40a: erster Teil des inneren Gehäuses
- 40b: zweiter Teil des inneren Gehäuses
- 42: Öffnungen
- 44: Filtereinrichtung
- 46: Wicking-Material
- 48: Bypass
- 50: Öffnungen
- 52: Rückschlagventil
- 54: Dichtlippe
- 56: Öffnungen
- 58: Dichtlippe
- 60: Trockenmittel
- 62: Vorspannelement
- 64: Raumbereich radial außerhalb von 44
- 64a: Raumbereich radial außerhalb von 52
- 65: radiale Breite von 64
- 66: Raumbereich radial innerhalb von 62
- 67: radialer Durchmesser von 66
- 68: maximaler Außendurchmesser von 14
- 69: Höhe von 14
- 70: Dichtring
- 72: Stützvorsprung
- 73: Anlagefläche
- 74: Endabschnitt
- 78: radiales Überstandsmaß
- 80: erste Dichtfläche
- 82: zweite Dichtfläche

## Patentansprüche

1. Lufttrocknerpatrone (10), insbesondere für eine Druckluftaufbereitungsanlage eines Nutzfahrzeugs, aufweisend:
ein Patronengehäuse (14) mit einem geschlossenen Gehäusedeckel (16);
ein in dem Patronengehäuse (14) aufgenommenes Trockenmittel (60); und
eine innerhalb des Patronengehäuses (14) angeordnete Filtereinrichtung (44), die in radialer Richtung quer zu einer Längsachse (12) der Lufttrocknerpatrone (10) von Druckluft durchströmbar ist,
**dadurch gekennzeichnet, dass**
ein Raumbereich (64) innerhalb des Patronengehäuses (14), der in radialer Richtung neben und außerhalb der Filtereinrichtung (44) liegt, zumindest teilweise mit Trockenmittel (60) gefüllt ist.

2. Lufttrocknerpatrone nach Anspruch 1, bei welcher
ein Bypass (48) vorgesehen ist, durch den Druckluft an der Filtereinrichtung (44) vorbei strömen kann und in dem ein Rückschlagventil (52) angeordnet ist; und ein Raumbereich (64a) innerhalb des Patronengehäuses (14), der in radialer Richtung außerhalb des Rückschlagventils (52) liegt, zumindest teilweise mit Trockenmittel (60) gefüllt ist.

3. Lufttrocknerpatrone nach einem der vorhergehenden Ansprüche, bei welcher eine Breite (65) des Raumbereichs (64) wenigstens etwa 10% eines Außendurchmessers (68) des Patronengehäuses (14) oder wenigstens etwa 10 mm beträgt.

4. Lufttrocknerpatrone nach einem der vorhergehenden Ansprüche, bei welcher ein maximaler Außendurchmesser (68) des Patronengehäuses (14) höchstens etwa 130 mm beträgt.

5. Lufttrocknerpatrone nach einem der vorhergehenden Ansprüche, bei welcher ein maximaler Außendurchmesser (68) des Patronengehäuses (14) höchstens etwa 80% einer Höhe (68) des Patronengehäuses (14) parallel zur Längsachse (12) der Lufttrocknerpatrone (10) beträgt.

6. Lufttrocknerpatrone nach einem der vorhergehenden Ansprüche, bei welcher die Filtereinrichtung (44) im Wesentlichen koaxial zur Längsachse (12) der Lufttrocknerpatrone (10) angeordnet ist.

7. Lufttrocknerpatrone nach einem der vorhergehenden Ansprüche, bei welcher in dem Patronengehäuse (14) ein inneres Gehäuse (40) angeordnet ist, um das Trockenmittel (60) in einem zwischen dem Patronengehäuse (14) und dem inneren Gehäuse (40) gebildeten Aufnahmeraum aufzunehmen,
ein Vorspannelement (62) vorgesehen ist, um zumindest einen Teil (40b) des inneren Gehäuses (40) in Richtung zum Gehäusedeckel (16) zu drücken, und ein Teil des Trockenmittels (60) in einem Raumbereich (66) radial innerhalb des Vorspannelements (62) aufgenommen ist.

8. Lufttrocknerpatrone nach Anspruch 7, bei welcher
das innere Gehäuse (40) einen ersten Teil (40a) und einen zweiten Teil (40b) aufweist, wobei der erste Teil (40a) radial außerhalb des zweiten Teils (40b) angeordnet ist und der zweite Teil (40b) relativ zum ersten Teil (40a) in axialer Richtung parallel zur Längsachse (12) der Lufttrocknerpatrone (10) bewegbar ist.

9. Lufttrocknerpatrone nach Anspruch 8, bei welcher
der zweite Teil (40b) des inneren Gehäuses (40) becherförmig ausgebildet ist und zumindest teilweise von dem Vorspannelement (62) umgeben ist.

10. Lufttrocknerpatrone nach einem der Ansprüche 7 bis 9, bei welcher
ein Durchmesser (67) des Raumbereichs (66) in einer Richtung quer zur Längsachse (12) der Lufttrocknerpatrone (10) wenigstens etwa 25% des Außendurchmessers (68) des Patronengehäuses (14) und/oder maximal etwa 45 mm beträgt.

11. Druckluftaufbereitungsanlage, insbesondere für Nutzfahrzeuge, mit wenigstens einer Lufttrocknerpatrone (10) nach einem der vorhergehenden Ansprüche.

## Claims

1. An air dryer cartridge (10), in particular for a compressed-air treatment system of a utility vehicle (14), comprising
a cartridge housing (14) having a closed housing cover (16);
a drying agent (60) accommodated in the cartridge housing (14); and
a filter device (44) arranged inside the cartridge housing (14) through which compressed air is able to flow transversely to a longitudinal axis (12) of the air dryer cartridge (10) in a radial direction,
**characterised in that**
a spatial region (64) inside the cartridge housing (14) located adjacent to and outside the filter device (45) in a radial direction is at least partially filled with drying agent (60).

2. An air dryer cartridge according to claim 1, in which
a bypass (48) is provided through which compressed air is able to flow past the filter device (44) and in which a non-return valve (52) is arranged; and
a spatial region (64a) inside the cartridge housing (14) located radially outside the non-return valve (52) is at least partially full of drying agent (60).

3. An air dryer cartridge according to either of the preceding claims, in which a width (65) of the spatial region (64) is at least approx. 10% of an external diameter (68) of the cartridge housing (14) or at least approx. 10 mm.

4. An air dryer cartridge according to any one of the preceding claims, in which a maximum external diameter (68) of the cartridge housing (14) is at most approx. 130 mm.

5. An air dryer cartridge according to any one of the preceding claims, in which a maximum external diameter (68) of the cartridge housing (14) is at most approx. 80% of a height (68) of the cartridge housing (14) parallel to the longitudinal axis (12) of the air dryer cartridge (10).

6. An air dryer cartridge according to any one of the preceding claims, in which the filter device (44) is arranged substantially coaxially with the longitudinal axis (12) of the air dryer cartridge (10).

7. An air dryer cartridge according to any one of the preceding claims, in which
an inner housing (40) is arranged in the cartridge housing (14) to accommodate the drying agent (60) in an accommodating space formed between the cartridge housing (14) and the inner housing (40),
a pre-loading element (62) is provided to push at least one part (40b) of the inner housing (40) in the direction of the housing cover (16), and
a part of the drying agent (60) is accommodated in a spatial region (66) radially inside the pre-loading element (62).

8. An air dryer cartridge according to claim 7, in which
the inner housing (40) has a first part (40a) and a second part (40b), the first part (40a) being arranged radially outside the second part (40b) and the second part (40b) being movable parallel to the longitudinal axis (12) of the air dryer cartridge (10) in an axial direction relative to the first part (40a).

9. An air dryer cartridge according to claim 8, in which
the second part (40b) of the inner housing (40) is shaped like a cup and is at least partially surrounded by the pre-loading element (62).

10. An air dryer cartridge according to any one of claims 7 to 9, in which
a diameter (67) of the spatial region (66) in a direction transverse to the longitudinal axis (12) of the air dryer cartridge (10) is at least approx. 25% of the external diameter (68) of the cartridge housing (14) and/or at most approx. 45 mm.

11. A compressed-air treatment system, in particular for utility vehicles, having at least one air dryer cartridge (10) according to any one of the preceding claims

## Revendications

1. Cartouche (10) de sécheur d'air, notamment pour un système de traitement d'air comprimé d'un véhicule utilitaire, comportant :
un boîtier (14) de cartouche, ayant un couvercle (16) fermé ;
un agent (60) dessiccateur, logé dans le boîtier (14) de la cartouche ; et
un dispositif (44) de filtration, disposé à l'intérieur du boîtier (14) de la cartouche et pouvant être traversé par de l'air comprimé dans une direction radiale transversalement à un axe (12) longitudinal de la cartouche (10) de sécheur d'air,
**caractérisée en ce que**
un région (64) de l'espace dans le boîtier (14) de la cartouche, qui se trouve dans la direction radiale à côté et à l'extérieur du dispositif (44) de filtration, est remplie, au moins en partie, de l'agent (60) dessiccateur.

2. Cartouche de sécheur d'air suivant la revendication 1, dans laquelle
il est prévu une dérivation (48), par laquelle de l'air comprimé peut passer devant le dispositif (44) de filtration et dans laquelle est monté un clapet (52) antiretour ; et une région (64a) de d'espace, à l'intérieur du boîtier (14) de la cartouche, qui se trouve dans la direction radiale à l'extérieur du clapet (52) antiretour, est remplie, au moins en partie, de l'agent (60) dessiccateur.

3. Cartouche de sécheur d'air suivant l'une des revendications précédentes, dans laquelle
une largeur (65) de la région (64) d'espace représente au moins environ 10% d'un diamètre (68) extérieur du boîtier (14) de la cartouche ou est d'au moins environ 10 mm.

4. Cartouche de sécheur d'air suivant l'une des revendications précédentes, dans laquelle
un diamètre (68) extérieur maximum du boîtier (14) de la cartouche est d'au plus d'environ 130 mm.

5. Cartouche de sécheur d'air suivant l'une des revendications précédentes, dans laquelle
un diamètre (68) extérieur maximum du boîtier (14) de la cartouche représente au plus environ 80% d'une hauteur (68) du boîtier (14) de la cartouche parallèlement à l'axe (12) longitudinal de la cartouche (10) de sécheur d'air.

6. Cartouche de sécheur d'air suivant l'une des revendications précédentes, dans laquelle
le dispositif (44) de filtration est dispositif sensiblement coaxialement à l'axe (12) longitudinal de la cartouche (10) de sécheur d'air.

7. Cartouche de sécheur d'air suivant l'une des revendications précédentes, dans laquelle
il est disposé, dans le boîtier (14) de la cartouche, une enveloppe (40) intérieure pour recevoir l'agent (60) dessiccateur dans un espace de réception formé entre le boîtier (14) de la cartouche et l'enveloppe (40) intérieure,
il est prévu un élément (62) de précontrainte pour repousser au moins une partie (40b) de l'enveloppe (40) intérieure, en direction du couvercle (16) du boîtier et une partie de l'agent (60) dessiccateur est reçue dans une région (66) de l'espace radialement à l'intérieur de l'élément (62) de précontrainte.

8. Cartouche de sécheur d'air suivant la revendication 7, dans laquelle
l'enveloppe (40) intérieure a une première partie (40a) et une deuxième partie (40b), la première partie (40a) étant disposée radialement à l'extérieur de la deuxième partie (4b) et la deuxième partie (40b) est, par rapport à la première partie (40a), mobile dans la direction axiale parallèlement à l'axe (12) longitudinal de la cartouche (10) de sécheur d'air.

9. Cartouche de sécheur d'air suivant, dans laquelle
la deuxième partie (40b) de l'enveloppe (40) intérieure est constituée en forme de godet et est entourée, au moins en partie, de l'élément (62) de précontrainte.

10. Cartouche de sécheur d'air suivant l'une des revendications 7 à 9, dans laquelle
un diamètre (67) de la région (66) d'espace, dans une direction transversalement à l'axe (12) longitudinal de la cartouche (10) de sécheur d'air, représente au moins environ 25% du diamètre (68) extérieur du boîtier (14) de la cartouche et/ou est au maximum d'environ 45 mm.

11. Système de traitement de l'air comprimé, notamment pour des véhicules utilitaires, comprenant au moins une cartouche (10) de sécheur d'air suivant l'une des revendications précédentes.
